# EUROPÄISCHE PATENTSCHRIFT

(11) **EP 3 189 897 B1**
(45) Veröffentlichungstag und Bekanntmachung des Hinweises auf die Patenterteilung: **20.03.2019**
(21) Anmeldenummer: 17150866.6
(22) Anmeldetag: 10.01.2017
(51) Int. Cl.: B01L 3/02, G01N 35/10

(54) **ABWURFMECHANISMUS FÜR PIPETTENSPITZEN**
EJECTION MECHANISM FOR PIPETTE TIPS
MÉCANISME D'ÉJECTION POUR POINTS DE PIPETTE

(30) Priorität: 11.01.2016 CH 342016
(43) Veröffentlichungstag der Anmeldung: 12.07.2017
(73) Patentinhaber: INTEGRA Biosciences AG, 7205 Zizers (CH)
(72) Erfinder: Fetz, Adrian, 7000 Chur (CH); Pasquier, Noel, 7302 Landquart (CH)
(74) Vertreter: Riederer Hasler & Partner Patentanwälte AG

(56) Entgegenhaltungen:
- US-A1- 2005 118 069
- US-A1- 2014 047 931
- US-A1- 2014 147 349

## Beschreibung

### Technisches Gebiet

Die Erfindung betrifft eine Pipette mit wechselbaren Pipettenspitzen, die einen Abwurfmechanismus zum Entfernen der Pipettenspitzen aufweist. Darüber hinaus sind ein Verfahren zum Entfernen der Pipettenspitzen und ein Gerät zum Betätigen des Abwurfmechanismus der Pipette Gegenstand der Erfindung.

### Stand der Technik

Pipetten dienen zum Dosieren von Flüssigkeiten und werden insbesondere in Laboren verwendet. Von besonderem Interesse im Zusammenhang mit der Erfindung sind handgehaltene und/oder handbedienbare Pipetten. Solche Geräte weisen einen Probenbehälter auf, in welchen eine (meist flüssige) zu pipettierende Probe aufgenommen und aus welchem diese wieder abgegeben werden kann. Der Probenbehälter ist dazu ausgebildet, mit der Pipette, insbesondere von Hand, bewegt zu werden.

Die Aufnahme und Abgabe einer Probe kann beispielsweise dadurch erreicht werden, dass im Probenbehälter zur Aufnahme der Probe ein Unterdruck und zur Abgabe der Probe ein Unterdruck erzeugt wird. Kolbenhubpipetten besitzen zu diesem Zweck beispielsweise einen beweglicher Kolben, wobei zwischen der zu pipettierenden Probe und dem Kolben eine Luftsäule angeordnet ist. Bei Bewegung des Kolbens in eine erste Richtung verdrängt der Kolben die Luftsäule, während er bei Bewegung in eine der ersten Richtung entgegengesetzte zweite Richtung die Luftsäule und damit auch die zu pipettierende Probe in den Probenbehälter zieht.

Um eine Kontamination zu vermeiden, können solche Pipetten mit auswechselbaren Probenbehältern in der Form von Pipettenspitzen ausgerüstet sein. Die Pipette verfügt dann über einen Verbindungsabschnitt, auf den die Pipettenspitze aufgesteckt und von dem sie nach Gebrauch wieder entfernt werden kann. Die Pipettenspitze weist üblicherweise zwei Öffnungen auf, wobei der Verbindungsabschnitt beim Aufstecken in die grössere der beiden Öffnungen aufgenommen wird und diese verschliesst. Die Aufnahme und Abgabe der Probe erfolgt durch die kleinere Öffnung. Da nur die Pipettenspitze mit der zu pipettierenden Probe in Berührung kommt, ist eine Kontamination bei nachfolgenden Pipettiervorgängen verhindert. Die Pipettenspitze ist üblicherweise ein Wegwerfartikel aus Kunststoff.

Neben den rein mechanischen existieren auch elektronisch gesteuerte Pipetten. Ausserdem können Pipetten einen (bei Einkanalpipetten) oder mehrere (bei Mehrkanalpipetten) Verbindungsabschnitte aufweisen. Mehrere Verbindungsabschnitte, die jeweils mit einer wechselbaren Pipettenspitze bestückt werden können, erlauben das gleichzeitige Aufnehmen und Abgeben mehrerer Proben. Je nach Anzahl und verwendeter Aufsteckkraft bedarf das Abwerfen der Pipettenspitzen einer nicht unbeachtlichen Kraft. Da der Abwurfmechanismus solcher Pipetten üblicherweise mechanischer Art und von Hand betätigt ist, kann dies bei längeren Arbeitszyklen zur Ermüdung der Hand führen.

Die bei handgehaltenen wie z.B. die aus der US2014/147349 bekannten Pipetten zum Einsatz kommenden Abwurfmechanismen besitzen üblicherweise einige Gemeinsamkeiten. Dazu gehört ein Schieber, der entlang des Verbindungsabschnitts beweglich ausgebildet ist. Bei Betätigung des Abwurfmechanismus wird der Schieber in Richtung der Pipettenspitze bewegt, tritt mit dieser in Kontakt und schiebt sie entgegen der Aufsteckrichtung vom Verbindungsabschnitt. Der Abwurfmechanismus ist mittels eines Bedienelements betätigbar. Das Bedienelement ist üblicherweise von Hand betätigbar und zum Beispiel als Knopf ausgebildet. Die auf das Bedienelement ausgeübte Kraft kann dabei mechanisch auf den Schieber übertragen werden und so dessen Bewegung in Richtung der Pipettenspitze bewirken. Der Teil des Abwurfmechanismus, der die Verbindung zwischen Bedienelement und Schieber herstellt, kann unterschiedlich ausgestaltet sein, weist jedoch im Allgemeinen eines oder mehrere bewegliche Glieder auf. Die Bewegung der Glieder ist mit der Bewegung des Schiebers gekoppelt. Zweckmässigerweise sind die Glieder zur Übertragung der (beim Betätigen) auf das Bedienelement ausgeübten Kraft auf den Schieber ausgebildet.

Auch bei der in diesem Dokument beschriebenen Erfindung kann es sich um Ausgestaltungsvarianten der vorbeschriebenen Arten von Pipetten handeln.

### Aufgabe der Erfindung

Es ist eine Aufgabe der vorliegenden Erfindung, eine Pipette mit wechselbaren Pipettenspitzen bereitzustellen, die einen Abwurfmechanismus zum Entfernen der Pipettenspitzen aufweist. Darüber hinaus soll ein Gerät zum Betätigen des Abwurfmechanismus der Pipette bereitgestellt werden. Durch Verwendung des genannten Geräts in Verbindung mit der Pipette kann das Entfernen von Pipettenspitzen von der Pipette erleichtert werden. Weitere Vorteile der vorliegenden Erfindung ergeben sich aus der nachfolgenden Beschreibung.

### Darstellung der Erfindung

Die oben genannte Aufgabe wird gelöst durch eine Pipette nach Anspruch 1 und ein Gerät nach Anspruch 9.

Offenbart sei unter anderem eine handgehaltene Pipette mit einem Handgriff, einem Verbindungsabschnitt zum Aufstecken einer Pipettenspitze und einem Abwurfmechanismus zum Entfernen der Pipettenspitze vom Verbindungsabschnitt. Der Abwurfmechanismus weist vorzugsweise einen beweglichen Schieber auf, der dazu ausgebildet ist, beim Betätigen des Abwurfmechanismus die Pipettenspitze vom Verbindungsabschnitt zu schieben. Die Pipette weist ein erstes und ein zweites Bedienelement zum Betätigen des Abwurfmechanismus auf, wobei das erste Bedienelement von Hand betätigbar ist.

Es ist vorteilhaft, die Pipette zusammen mit einem Gerät zu verwenden, wie es in diesem Dokument beschrieben wird. Dabei handelt es sich um ein Gerät zum Betätigen des (Pipettenspitzen-)Abwurfmechanismus einer Pipette. Die in diesem Dokument beschriebene Pipette und das in diesem Dokument beschriebene Gerät seien sowohl unabhängig voneinander als auch als Komponenten eines Systems offenbart. Weiter sei die gemeinsame Verwendung und/oder das Zusammenwirken der Pipette und des Geräts zum Zwecke der Betätigung des Abwurfmechanismus offenbart.

Bevorzugt ist das zweite Bedienelement der Pipette nicht von Hand und/oder nicht ohne Hilfsmittel betätigbar und/oder das zweite Bedienelement ist dazu ausgebildet, von ausserhalb maschinell (insbesondere durch das in diesem Dokument beschriebene Gerät) betätigt zu werden.

Das Gerät kann ein bewegliches Teil aufweisen, welches dazu ausgebildet ist, das zweite Bedienelement zu betätigen und/oder mit dem zweiten Bedienelement zum Betätigen des Abwurfmechanismus zusammenzuwirken.

Das bewegliche Teil und das zweite Bedienelement können vorteilhaft dazu ausgebildet sein, ineinander zu greifen und/oder formschlüssig zusammenzuwirken. Alternativ oder zusätzlich können das bewegliche Teil und das zweite Bedienelement komplementär zueinander geformt sein. Zum Beispiel kann das bewegliche Teil ein Fortsatz sein und das Bedienelement kann eine Öffnung zur Aufnahme des Fortsatzes aufweisen.

Zweckmässigerweise wird durch eine Bewegung des beweglichen Teils relativ zum Gerät eine Bewegung des zweiten Bedienelements relativ zur Pipette bewirkt, wodurch das zweite Bedienelement und/oder der Abwurfmechanismus betätigt wird.

Nachfolgend werden Merkmale beschrieben, wobei diese (individuell) als bevorzugte Merkmale zu betrachten sind, auch wenn sie nicht explizit als solche bezeichnet werden. Die Merkmale seien separat (als Teil einer beliebigen Pipette, eines beliebigen Geräts oder eines beliebigen Verfahrens) und - soweit sie sich nicht ausschliessen - in beliebiger Kombination offenbart. Dies schliesst die Möglichkeit der gleichzeitigen Verwirklichung aller beschriebenen Merkmale ein.

Bei der Pipette handelt es sich um eine handgehaltene Pipette. Sie kann dazu ausgebildet sein, von einem Benutzer während des bestimmungsgemässen Gebrauchs (insbesondere mit einer einzigen Hand) gehalten und/oder bedient und/oder angehoben zu werden. Der bestimmungsgemässe Gebrauch kann die Aufnahme und/oder Abgabe fluider (insbesondere flüssiger) Proben und/oder deren Transport mittels der Pipette von einem ersten Behälter (Ursprungsbehälter) zu einem zweiten Behälter (Zielbehälter) beinhalten. Insbesondere kann die Pipette dazu ausgebildet sein, zwecks Transport einer fluiden Probe vollständig von einer Hand getragen von einem ersten Behälter zu einem zweiten Behälter bewegt zu werden.

Die Pipette weist einen Handgriff auf, der mit Vorteil dazu ausgebildet ist, von einer Hand umfasst zu werden.

Die Pipette besitzt mit Vorteil ein Gewicht von weniger als 2, 1, 0.5 oder 0.3 Kilogramm und/oder mehr als 10, 30 oder 50 Gramm.

Die Pipette kann eine Einrichtung zur Erzeugung eines Unterdrucks (also eines Drucks, der geringer als der atmosphärische Druck ist) und/oder eines Überdrucks (also eines Drucks der höher als der atmosphärische Druck ist) in der Pipettenspitze aufweisen. Durch die Erzeugung eines Unterdrucks kann eine Probe in die Pipettenspitze eingesaugt werden, während durch Erzeugung eines Überdrucks eine Probe aus der Pipettenspitze ausgestossen werden kann.

Vorteilhaft weist die Pipette eine Verdrängungseinrichtung zur Gaspolsterverdrängung auf. Die Verdrängungseinrichtung weist eine Bewegungseinrichtung auf, die einen oder mehrere Kolben aufweisen kann. Der Kolben ist dazu vorgesehen, ein Luftpolster zu expandieren (beim Einsaugen einer Probe in die Pipettenspitze) und/oder zu komprimieren (beim Ausstossen einer Probe aus der Pipettenspitze).

Es kann vorgesehen sein, dass es sich bei der Pipette um eine Luftpolsterpipette oder eine Direktverdrängerpipette handelt.

Es ist von Vorteil, wenn es sich bei der Pipette um eine elektronische Pipette handelt. Insbesondere kann die Pipette einen elektronischen Speicher aufweisen.

Vorzugsweise handelt es sich bei der Pipette um eine elektronische Pipette, wobei die Pipette einen Speicher aufweist, wobei der Speicher Informationen zur Steuerung eines Geräts zum Betätigen des Abwurfmechanismus enthält. In diesem Fall ist es zweckmässig, wenn die Pipette zusätzlich eine Kommunikationseinrichtung zur (vorzugsweise kabellosen) Übermittlung der Informationen an das Gerät aufweist. Die Informationen können zum Beispiel mittels einer Benutzerschnittstelle in den Speicher eingegeben werden. Die Benutzerschnittstelle kann Teil der Pipette sein und beispielsweise ein Display und/oder eine Eingabevorrichtung (vorzugsweise mit Eingabeelementen wie Knöpfen oder ein Touchscreen) aufweisen.

Die Pipette weist einen oder mehrere (z.B. mindestens 4 oder 8 und/oder höchstens 32 oder 24) Verbindungsabschnitte auf. Der Verbindungsabschnitt kann zum Beispiel konsusförmig ausgebildet sein. Vorteilhaft handelt es sich bei der Pipette um eine Mehrkanalpipette, welche mehrere Verbindungsabschnitte zum Aufstecken von jeweils einer Pipettenspitze aufweist.

Diese Pipette kann pro Verbindungsabschnitt und/oder pro Pipettenspitze zum Dosieren von Flüssigkeitsvolumen von mindestens 0.05 oder 0,1µl und/oder höchstens 1000 oder 5000 oder 10000 µl ausgebildet sein.

Sind mehrere Verbindungsabschnitte vorhanden, so sind diese vorzugsweise nebeneinander und/oder in einer Linie und/oder parallel zueinander angeordnet. Die Verbindungsabschnitte sind dazu ausgebildet, mit jeweils einer Pipettenspitze verbunden zu werden. Üblicherweise wird die Pipettenspitze dabei auf den Verbindungsabschnitt aufgesteckt.

Wenn in diesem Dokument von einem Verbindungsabschnitt die Rede ist, so seien jeweils alternativ auch mehrere Verbindungsabschnitte offenbart (und umgekehrt). Dasselbe gilt für die Erwähnung von einer Pipettenspitze.

Die Pipettenspitze ist wechselbar und/oder lösbar mit dem Verbindungsabschnitt verbindbar und/oder der Verbindungsabschnitt ist dazu ausgebildet, widerholt mit einer Pipettenspitze verbunden und wieder von dieser entfernt zu werden.

Die Pipettenspitze kann aus Kunststoff hergestellt sein. Vorteilhaft weist die Pipettenspitze zwei Öffnungen auf, von denen eine grösser ist als die andere. Die grössere Öffnung ist dazu ausgebildet, das freie Ende des Verbindungsabschnitts aufzunehmen und/oder klemmend mit dem Verbindungsabschnitt zusammenzuwirken, während die kleinere Öffnung zur Aufnahme und/oder Abgabe einer fluiden, insbesondere flüssigen, Probe ausgebildet ist.

Unter der Verbindungsrichtung ist die Richtung zu verstehen, in welche die Pipettenspitze relativ zum Verbindungsabschnitt zwecks Verbindung mit dem Verbindungsabschnitt bewegt wird. Unter der Abwurfrichtung ist die Richtung zu verstehen, in welche die Pipettenspitze relativ zum Verbindungsabschnitt zwecks Entfernung vom Verbindungsabschnitt bewegt wird. Vorteilhaft sind die Verbindungsrichtung und die Abwurfrichtung einander entgegen gerichtet und/oder entlang (insbesondere im Wesentlichen parallel zu) der Längsachse der Pipettenspitze und/oder der Längsachse des Verbindungsabschnitts ausgerichtet.

Zur Verbindung der Pipettenspitze mit dem Verbindungsabschnitt kann die Pipettenspitze in Verbindungsrichtung auf den Verbindungsabschnitt zu bewegt werden, bis die Verbindung zwischen Pipettenspitze und Verbindungsabschnitt (z.B. durch Klemmung und/oder Reibschluss) hergestellt ist. Zur Entfernung der Pipettenspitze kann die Pipettenspitze (insbesondere durch den Abwurfmechanismus und/oder den Schieber) in die Abwurfrichtung bewegt werden, bis die Verbindung zwischen Pipettenspitze und Verbindungsabschnitt gelöst ist.

Der Abwurfmechanismus weist einen relativ zur Pipette, insbesondere relativ zum Verbindungsabschnitt (vorzugsweise entlang des Verbindungsabschnitts und/ oder in die Abwurfrichtung), beweglichen Schieber auf. Der Schieber ist zweckmässigerweise dazu ausgebildet, beim Betätigen des Abwurfmechanismus mit der Pipettenspitze in Kontakt stehend und/oder in Kontakt tretend die Pipettenspitze vom Verbindungsabschnitt zu schieben.

Zum Beispiel kann die Pipettenspitze eine Öffnung (die weiter oben beschriebene grössere Öffnung) aufweisen, wobei die Öffnung dazu ausgebildet ist, den Verbindungsabschnitt aufzunehmen. Dabei kann in einer einfachen Ausführung die der Öffnung benachbarte Innenseite der Pipettenspitze mit der Aussenseite des Verbindungsabschnitts klemmend zusammenwirken und/eine reibschlüssige Verbindung bilden. Der Schieber kann zweckmässigerweise im Bereich der besagten Öffnung mit der Pipettenspitze in Kontakt treten und/oder stehen, insbesondere kann der Schieber mit dem Rand der besagten Öffnung in Kontakt treten und/ oder stehen, um die Pipettenspitze vom Verbindungsabschnitt zu schieben.

In einer Ausgangsstellung und/oder vor dem Betätigen des Abwurfmechanismus kann der Schieber in kurzem Abstand (z.B. in einer Entfernung von weniger als 10, 5 oder 3 Millimetern) von der mit dem Verbindungsabschnitt verbundenen Pipettenspitze angeordnet sein. Beim Betätigen des Abwurfmechanismus bewegt sich der Schieber auf die Pipettenspitze zu und tritt mit dieser in Kontakt, wobei vorzugsweise Druck auf die Pipettenspitze ausgeübt wird, der die beschriebene Klemmung und/oder den beschriebenen Reibschluss überwindet.

Der Schieber ist dem Verbindungsabschnitt zugeordnet. Bei Vorhandensein mehrerer Verbindungsabschnitte kann der Schieber mehreren oder allen Verbindungsabschnitten zugeordnet sein. Entsprechend kann der Schieber (wie für einen Verbindungsabschnitt beschrieben) relativ zu den ihm zugeordneten Verbindungsabschnitten beweglich sein und/oder die Pipettenspitzen (zum Beispiel gleichzeitig oder nacheinander) von den ihm zugeordneten Verbindungsabschnitten schieben

Die Pipette weist ein erstes und ein zweites Bedienelement zum Betätigen des Abwurfmechanismus auf. Die Bedienelemente sind zweckmässigerweise von aussen zugänglich und/oder von aussen betätigbar, insbesondere von ausserhalb der Pipette.

Das erste Bedienelement ist von Hand betätigbar. Dabei kann es sich zum Beispiel um ein mechanisches Bedienelement wie einen Druckknopf oder einen Schalter handeln. Es kann jedoch auch ein elektronisches Bedienelement wie z.B. ein Touchscreen sein.

Es ist von Vorteil, wenn im Zustand, in dem die Pipette von einer Hand gehalten ist, das erste Bedienelement durch dieselbe Hand, insbesondere durch einen Finger der Hand erreichbar und/oder betätigbar ist. Im in der Hand gehaltenen Zustand der Pipette ist das zweite Bedienelement vorzugsweise nicht durch dieselbe Hand wie das erste Bedienelement betätigbar und/oder nicht durch besagte Hand erreichbar.

Besonders bevorzugt ist das zweite Bedienelement der Pipette dazu ausgebildet, zum Betätigen des Abwurfmechanismus mit einem externen Gerät, d.h. einem Gerät, das nicht Teil der Pipette ist, zusammenzuwirken.

Der Abwurfmechanismus kann vorzugsweise alternativ durch das erste oder das zweite Bedienelement betätigt werden und/ oder zur Betätigung des Abwurfmechanismus ist die Betätigung eines der Bedienelemente ausreichend.

Der Abwurfmechanismus kann dazu ausgebildet sein, eine Kraft (vorzugsweise mechanisch) auf den Schieber zu übertragen. Insbesondere kann der Abwurfmechanismus dazu ausgebildet sein, eine auf das erste und/oder zweite Bedienelement ausgeübte Kraft (vorzugsweise mechanisch) auf den Schieber zu übertragen.

Der Abwurfmechanismus kann zu diesem Zweck zum Beispiel ein bewegliches Glied aufweisen. Es kann vorgesehen sein, dass das bewegliche Glied relativ zum Verbindungsabschnitt (vorzugsweise in dieselbe Richtung wie der Schieber und/oder im Wesentlichen in Abwurfrichtung und/oder translatorisch und/oder linear) bewegbar ausgebildet ist. Das bewegliche Glied ist zweckmässigerweise mit dem Schieber gekoppelt, so dass die Bewegung des Glieds die Bewegung des Schiebers bewirkt. Das Glied kann nach einer Variante innerhalb des Gehäuses der Pipette angeordnet sein.

Das zweite Bedienelement ist mit Vorteil am beweglichen Glied angeordnet und/oder eine Betätigung des ersten und/oder zweiten Bedienelements bewirkt die Bewegung des Glieds.

Das erste Bedienelement und/oder das zweite Bedienelement können miteinander und/oder mit dem Schieber mechanisch gekoppelt und/oder über ein oder mehrere bewegliche Glieder verbunden sein. Eines der Glieder ist vorzugsweise das vorgängig beschriebene bewegliche Glied. Das bewegliche Glied und/oder die beweglichen Glieder können der Kraftübertragung auf den Schieber dienen.

Das bewegliche Glied ist mit Vorteil gefedert, so dass es nach der durch die Betätigung des ersten und/ oder zweiten Bedienelement bewirkten Bewegung von einer Ausgangsstellung in eine Endstellung durch die Federkraft wieder zurück von der Endstellung in die Ausgangsstellung bewegt wird.

Das zweite Bedienelement ist dazu ausgebildet, mit einem Gerät zum Betätigen des Abwurfmechanismus zusammenzuwirken. Insbesondere ist das zweite Bedienelement dazu ausgebildet, zum Betätigen des Abwurfmechanismus mit einem beweglichen Teil des Geräts zusammenzuwirken. Vorzugsweise kann das zweite Bedienelement zu diesem Zweck ein Verbindungsmittel zum (zum Beispiel formschlüssigen oder kraftschlüssigen) Verbinden mit dem beweglichen Teil aufweisen.

Das bewegliche Teil ist zweckmässigerweise in dieselbe Richtung wie das zweite Bedienelement und/oder in Abwurfrichtung bewegbar.

Damit das bewegliche Teil des Geräts zwecks Betätigung des zweiten Bedienelements mit dem zweiten Bedienelement zusammenwirken kann, können das bewegliche Teil und das zweite Bedienelement zum Beispiel korrespondierend, insbesondere komplementär, geformt sein. Beispielsweise kann das bewegliche Teil die Form eines Stifts aufweisen, der in eine Öffnung des zweiten Bedienelements aufnehmbar ist. Allgemein sollte das bewegliche Teil dazu ausgebildet sein, mit dem zweiten Bedienelement in Kontakt zu treten und eine Kraft auf dieses auszuüben und es so zu betätigen und/oder in der weiter oben beschriebenen Weise zu bewegen.

Die Pipette kann ein den Abwurfmechanismus (und/oder das oben beschriebene bewegliche Glied) umschliessendes Gehäuse aufweisen und das zweite Bedienelement kann dann durch eine Öffnung im Gehäuse von aussen zugänglich sein, wobei die Öffnung vorzugsweise durch einen am Gehäuse angeordneten, beweglichen Verschluss verschliessbar ist. Beim Verschluss kann es sich zum Beispiel um eine Klappe oder einen Schieber handeln. Der Verschluss kann gemäss einer Variante drehbar oder linear verschiebbar sein. Mit Vorteil ist der Verschluss entlang oder parallel zur Oberfläche des Gehäuses beweglich ausgebildet. Das Gerät zum Betätigen des Abwurfmechanismus kann dazu ausgebildet sein, den Verschluss zu öffnen.

Nach einer bevorzugten Variante weist die Pipette ein Oberteil und ein mit diesem lösbar (z.B. mittels Bajonettverbindung, Drehverbindung oder Einrastverbindung) verbundenes Unterteil auf. Der Handgriff und das erste Bedienelement sind dabei am Oberteil angeordnet. Das zweite Bedienelement kann ebenfalls am Oberteil angeordnet sein. Bevorzugt ist jedoch, wenn das zweite Bedienelement am Unterteil angeordnet ist. Der Verbindungsabschnitt und der Schieber sind am Unterteil angeordnet, wobei dies optional auch für die Verdrängungseinrichtung und/oder für die zur Erzeugung eines Unter- und Überdrucks (vergleiche Beschreibung weiter oben) notwendigen Einrichtungen wie zum Beispiel einen Kolben gelten kann.

Das Gerät weist mit Vorteil einen Antrieb (beispielsweise einen Aktor oder einen Elektromotor oder ein Piezoelement) auf, wobei der Antrieb dazu ausgebildet ist, das zweite Bedienelement der Pipette zu betätigen. Insbesondere kann zu diesem Zweck das weiter oben beschriebene bewegliche Teil des Geräts mittels des Antriebs bewegbar sein.

Gemäss einer bevorzugten Variante weist das Gerät einen Halter zum Halten der Pipette auf, wobei der Antrieb und/oder das bewegliche Teil relativ zum Halter so positioniert ist, dass das zweite Bedienelement im Zustand, wenn die Pipette im Halter gehalten ist, durch den Antrieb betätigbar ist.

Vorzugsweise ist das Gerät dazu ausgebildet, Informationen von der Pipette zu empfangen und in Abhängigkeit von diesen Informationen das zweite Bedienelement zu betätigen, wobei das Gerät zu diesem Zweck ein Kommunikationseinrichtung zum (vorzugsweise kabellosen) Empfang der Informationen und einen Mikroprozessor zur Verarbeitung der Informationen und zur Steuerung des Antriebs aufweist.

Beim Gerät handelt es sich mit Vorteil um eine Positioniereinrichtung, insbesondere um eine Positioniereinrichtung wie sie in der europäischen Patentanmeldung Nr. 2698202 A2 beschrieben ist.

Vorteilhaft handelt es sich beim Gerät um eine Positioniereinrichtung zur Positionierung der Pipette bei der Aufnahme und/ oder Abgabe von Proben und/oder beim Transport der Proben von einem ersten Behälter zu einem zweiten Behälter. Zweckmässigerweise weist das Gerät dann zusätzlich zum ersten Halter einen zweiten Halter zum Halten des ersten oder zweiten Behälters und einen zweiten (und optional ein oder mehrere weitere) Antrieb (beispielsweise einen Aktor oder einen Elektromotor oder ein Piezoelement) zur Bewegung des ersten Halters relativ zum zweiten Halter auf. Zudem ist es von Vorteil, wenn das Gerät dazu ausgebildet ist, in Abhängigkeit der Informationen von der Pipette die Positionierung der Pipette vorzunehmen und/oder die Bewegung des ersten Halters relativ zum zweiten Halter auszuführen.

Der zweite Antrieb kann zur Positionierung der Pipette und/ oder zu deren Bewegung in gegebenenfalls mehreren Richtungen über eine Arbeitsfläche und/oder in einer Richtung quer zur Arbeitsfläche und/oder auf die Arbeitsfläche zu und/oder von der Arbeitsfläche weg ausgebildet sein.

Offenbart sei zudem ein Verfahren zum Entfernen einer Pipettenspitze von einem Verbindungsabschnitt einer handgehaltenen Pipette (vorzugsweise einer Pipette der in diesem Dokument beschriebenen Art). Die Pipette weist zweckmässigerweise einen Handgriff, einem Abwurfmechanismus zum Entfernen der Pipettenspitze vom Verbindungsabschnitt sowie ein erstes und ein zweites Bedienelement zum Betätigen des Abwurfmechanismus auf, wobei das erste Bedienelement im Bereich des Handgriffs angeordnet und von Hand betätigbar ist. Beim Verfahren wird die Pipette mit einem Gerät (vorzugsweise der in diesem Dokument beschriebenen Art) in Kontakt gebracht, wobei das zweite Bedienelement mit einem beweglichen Teil des Geräts in Kontakt (insbesondere in Eingriff) gebracht und dann durch Bewegung des beweglichen Teils betätigt wird.

Es kann vorgesehen sein, dass das Gerät einen Halter aufweist und die Pipette im Halter gehalten ist, wobei das bewegliche Teil des Geräts im Zustand wenn die Pipette im Halter gehalten ist, in Kontakt mit dem zweiten Bedienelement steht.

Bei der Pipette kann es sich um eine elektronische Pipette mit einem Speicher handeln, wobei der Speicher Informationen zur Steuerung des Geräts enthält, wobei die Pipette und das Gerät jeweils eine Kommunikationseinrichtung aufweisen und die Informationen von der Pipette an das Gerät (vorzugsweise kabellos) übermittelt werden. Das Gerät weist einen Antrieb zur Bewegung des beweglichen Teils auf, wobei der Antrieb in Abhängigkeit von den Informationen gesteuert und das bewegliche Teil bewegt wird.

Begriffe in diesem Dokument sollen bevorzugt so verstanden werden, wie sie ein Fachmann auf dem Gebiet verstehen würde. Sind im jeweiligen Kontext mehrere Interpretationen möglich, so sei vorzugsweise jede Interpretation individuell offenbart. Insbesondere für den Fall, dass Unklarheiten bestehen sollten, können alternativ oder ergänzend die in diesem Dokument aufgeführten bevorzugten Definitionen herangezogen werden.

In diesem Dokument soll sowohl bei Verwendung des bestimmten Artikels (z.B. "das") als auch bei Verwendung des unbestimmten Artikels (z.B. "ein") in Verbindung mit einem Objekt (soweit nichts anderes angegeben ist) das Objekt ohne Festlegung, ob es sich um dasselbe Objekt gleicher Bezeichnung handelt, welches andernorts im Dokument erwähnt ist, offenbart sein. Unabhängig davon soll offenbart sein, dass es sich bei jeder Erwähnung eines Objekts gleicher Bezeichnung vorzugsweise um dasselbe Objekt handelt. Beispiele für solche Objekte sind das Gehäuse und das bewegliche Glied. Wenn in diesem Dokument von einem "Gerät" die Rede ist, so sei nach einer bevorzugten Variante das Gerät zum Betätigen des Abwurfmechanismus einer Pipette gemeint. Mit dem "Abwurfmechanismus" ist nach einer bevorzugten Variante der Abwurfmechanismus zum Entfernen der Pipettenspitze von der Pipette gemeint.

Aktionen, die in der Form von Eignungen, Fähigkeiten, Eigenschaften oder Funktionen der in diesem Dokument beschriebenen Vorrichtungen (oder deren Teile) offenbart sind, seien auch (unabhängig und in beliebiger Kombination) als Verfahrensschritte des Verfahrens offenbart und zwar abhängig und unabhängig von der entsprechenden Vorrichtung oder dem entsprechenden Vorrichtungsteil.

Es sei zudem die Verwendung von Merkmalen der beschriebenen Vorrichtungen oder Vorrichtungsteile (unabhängig und in beliebiger Kombination) als Verfahrensschritte des Verfahrens offenbart.

Umgekehrt können die offenbarten Vorrichtungen oder Vorrichtungsteile Mittel aufweisen, die einen oder mehrere der im Zusammenhang mit dem offenbarten Verfahren genannten Verfahrensschritte durchführen können und/oder dazu ausgebildet sind.

### Kurze Beschreibung der Zeichnungen

Es zeigen:
- Fig. 1: eine Seitenansicht einer Mehrkanalpipette mit Abwurfmechanismus und zwei Bedienelementen;
- Fig. 2: die Pipette aus Fig.1 perspektivisch mit einem Gerät zur Betätigung des Abwurfmechanismus;
- Fig. 3: die Pipette und das Gerät aus Fig.2 in verbundenem Zustand perspektivisch;
- Fig. 4: eine Seitenansicht der Pipette und des Geräts aus Fig.2 in verbundenem Zustand;
- Fig. 5: den unteren Teil der Pipette aus Fig.1 mit teilweise entferntem Gehäuse mit dem zweiten Bedienelement in Ausgangsstellung; und
- Fig. 6: den unteren Teil der Pipette aus Fig.1 mit teilweise entferntem Gehäuse mit dem zweiten Bedienelement in Endstellung.

### Ausführung der Erfindung

Die Erfindung wird nachfolgend anhand der Zeichnungen beispielhaft erläutert.

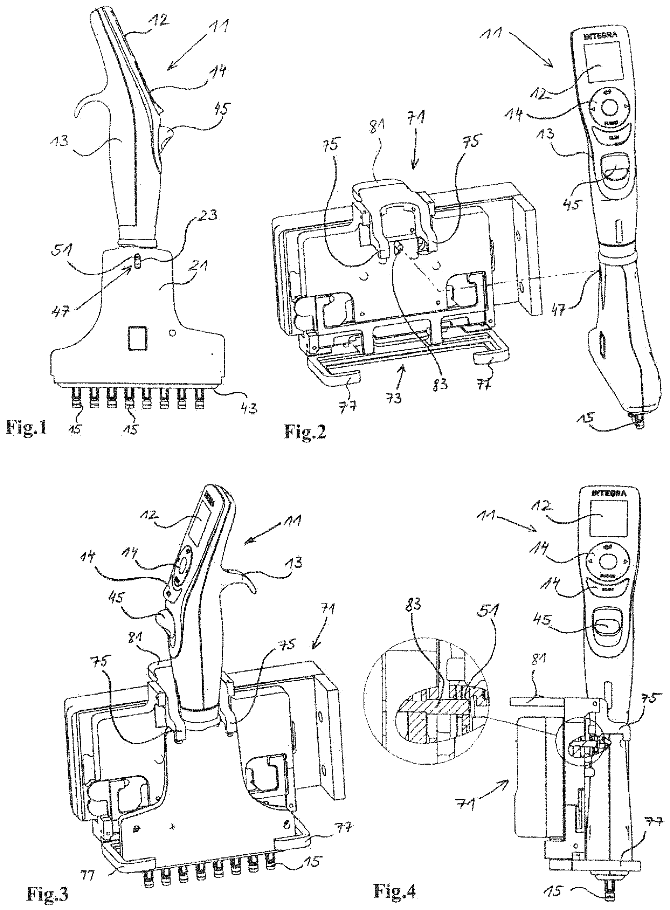

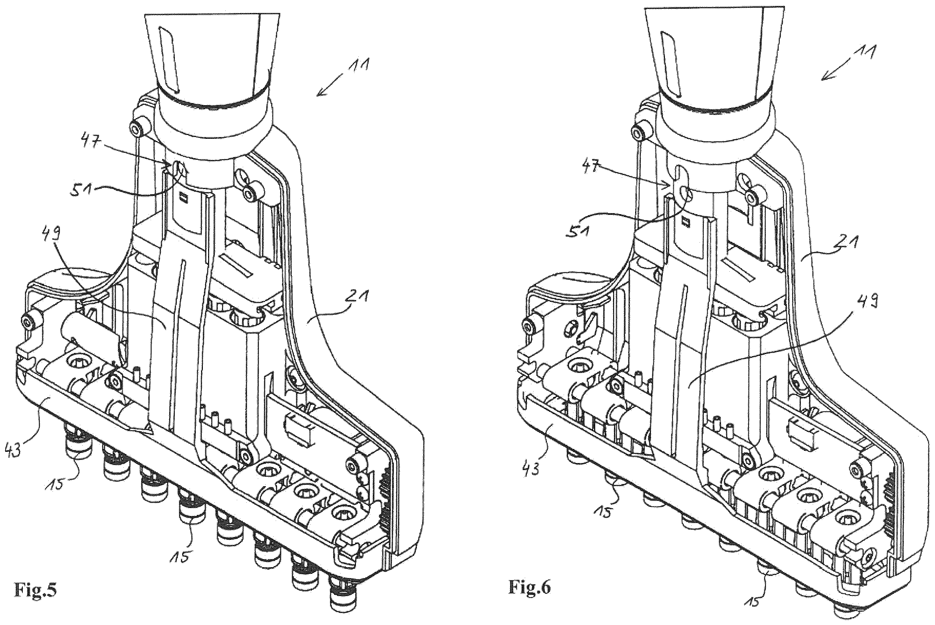

Alle Zeichnungen zeigen dieselbe Pipette 11, eine elektronische Mehrkanalpipette mit einem Abwurfmechanismus zum Entfernen von Pipettenspitzen, wobei in den Fig.5 und 6 zur besseren Illustration des Abwurfmechanismus nur der untere Teil (Unterteil) der Pipette 11 dargestellt und das Gehäuse 21 der Pipette 11 teilweise entfernt ist. Die Beschreibung des Geräts 71 zum Betätigen des Abwurfmechanismus kann anhand der Fig.2, 3 und 4 nachvollzogen werden, welche dieselbe Ausgestaltungsvariante eines solchen zeigen.

Die Pipette 11, beispielsweise eine Kolbenhubpipette, ist dazu ausgebildet, mit einer Hand gehalten und mit derselben Hand bedient zu werden. Die Pipette 11 kann bei ihrer Verwendung, zu der die Aufnahme, der Transport und die Abgabe flüssiger Proben gehört, mittels einer Hand im Abstand von einer Auflagefläche gehalten und/oder bewegt werden.

Es ist in diesem Zusammenhang zweckmässig, wenn ein Oberteil und/oder ein Ende der Pipette 11 im Wesentlichen stabförmig ausgebildet ist, damit es von einer Hand umfasst und gehalten werden kann. Im Bereich des Handgriffs 13 sind ein Display 12 und verschiedene Eingabeelemente wie Knöpfe 14 angeordnet, die unter Anderem zur Eingabe von Informationen durch den Benutzer dienen. Ebenfalls im Bereich des Handgriffs 13 ist ein erstes von Hand betätigbares Bedienelement 45 lokalisiert, durch welches der Abwurfmechanismus betätigt werden kann.

Die Pipette 11 weist mehrere Verbindungsabschnitte 15 auf (nur teilweise markiert), auf die jeweils eine Pipettenspitze (nicht gezeigt) aufgesteckt werden kann. Geeignete Pipettenspitzen sind im Wesentlichen röhrenförmig, mit einer grösseren Öffnung am einen Ende und einer kleineren Öffnung am gegenüberliegenden, üblicherweise spitz zulaufenden Ende. Die grössere Öffnung besitzt im Wesentlichen denselben Durchmesser wie ein Verbindungsabschnitt 15 und ist zur Aufnahme des Verbindungsabschnitts 15 vorgesehen. Die kleinere der Öffnungen dient zur Aufnahme und Abgabe der Probe. Beim Aufstecken der Pipettenspitze wird der Verbindungsabschnitt 15 (teilweise) in die grössere der beiden Öffnungen eingeführt, wobei die Aussenseite des Verbindungsabschnitts 15 dichtend mit der Innenseite der Pipettenspitze zusammenwirkt. Die Pipettenspitze ist ein wechselbarer Probenbehälter und dient der Aufnahme und Abgabe von flüssigen Proben, wobei die Aufnahme durch die Erzeugung eines Unterdrucks und die Abgabe durch die Erzeugung eines Überdrucks in der Pipettenspitze bewerkstelligt wird. Die Verbindungsabschnitte 15 weisen zu diesem Zweck Öffnungen zum Gasaustausch zwischen Pipette 11 und Pipettenspitzen auf.

Die Pipettenspitzen sind lösbar mit den Verbindungsabschnitten 15 verbunden. Zur Entfernung der Pipettenspitzen von den Verbindungsabschnitten 15 weist die Pipette 11 einen Abwurfmechanismus auf, der durch die Betätigung eines Bedienelements 45 oder 47 ausgelöst werden kann. Als Teil des Abwurfmechanismus ist ein Schieber 43 vorgesehen, der die Verbindungsabschnitte ganz oder teilweise umgibt und bei Betätigung des Abwurfmechanismus aus einer Ausgangsstellung in eine Endstellung und vorzugsweise wieder zurück bewegt wird. Der Schieber 43 bewegt sich dabei entlang der Verbindungsabschnitte 15, tritt mit den Pipettenspitzen im Bereich des Randes ihrer grösseren Öffnung in Kontakt und schiebt die Pipettenspitzen von den Verbindungsabschnitten 15. Wie im vorliegenden Fall kann der Schieber 43 zum Beispiel als Leiste mit mehreren Öffnungen ausgestaltet sein, wobei die Verbindungsabschnitte 15 in den Öffnungen angeordnet sind. Ausser dem Schieber 43 und den Bedienelementen 45 und 47 sind alle Teile des Abwurfmechanismus vom Gehäuse 21 der Pipette 11 umgeben. Dies stellt jedoch nur eine mögliche Variante dar.

Der Schieber 43 ist mechanisch mit den Bedienelementen 45 und 47 gekoppelt, so dass eine Bewegung des ersten Bedienelements 45 und/oder des zweiten Bedienelements 47 mit der oben beschriebenen Bewegung des Schiebers 43 entlang der Verbindungsabschnitte 15 einhergeht. Die mechanische Kopplung kann durch eines oder mehrere (relativ zu den Verbindungsabschnitten) bewegliche Glieder 49 hergestellt sein, die den Schieber 43 mit dem ersten und/oder zweiten Bedienelement 45,47 verbinden. Da die Glieder 49 im vorliegenden Beispiel vom Gehäuse 21 umgeben sind, ist nur in den Fig.5 und 6, bei denen ein Teil des Gehäuses entfernt ist, das den Schieber 43 mit dem zweiten Bedienelement 47 verbindende Glied 49 erkennbar. Das erste Bedienelement 45 ist mit einem Finger der die Pipette 11 haltenden Hand betätigbar. Das zweite Bedienelement 47 ist hingegen dazu vorgesehen, von einem externen Gerät 71 betätigt zu werden.

Das in den Fig.2, 3 und 4 gezeigte Gerät 71 weist ein bewegliches Teil in Form eines Stiftes 83 auf sowie einen Halter 73 zum Halten der Pipette 11.

Das zweite Bedienelement 47 weist eine Öffnung 51 auf, in die der Stift 83 aufgenommen ist, wenn die Pipette 11 in den Halter 73 aufgenommen ist. Der Stift 83 ist mittels eines Antriebs bewegbar, wobei die Bewegung des zweiten Bedienelements 47 (und damit die Betätigung des Abwurfmechanismus) wegen der Aufnahme des Stifts 83 in die Öffnung 51 mit der Bewegung des Stifts 83 gekoppelt ist.

Der Halter in der gezeigten Ausgestaltungsvariante besitzt zwei untere Bügel 77, welche die Pipette 11 tragen und bei Betätigung des Abwurfmechanismus einer Bewegung der Pipette 11 in eine Bewegungsrichtung des Stifts 83 entgegenwirken. Zusätzlich weist der Halter 73 zwei obere Bügel 75 auf, die einer Bewegung der Pipette 11 in die andere (entgegengesetzte) Bewegungsrichtung des Stifts 83 entgegenwirken. Die oberen Bügel 75 sind durch Betätigung eines Hebels 81 nach oben und/oder von den unteren Bügeln 77 weg drehbar, was eine Aufnahme und Entfernung der Pipette 11 in den Halter 73 respektive aus dem Halter 73 erlaubt. Der Halter 73 kann aber natürlich auch auf eine andere Art ausgestaltet sein.

Es ist bevorzugt, wenn die Pipette 11 das Gerät 71 steuert. Zu diesem Zweck kann die Pipette 11 einen Speicher aufweisen, welcher Informationen enthält. Die Informationen können, wie oben beschrieben, zum Beispiel durch den Benutzer via Eingabeelemente (z.B. in Form von Knöpfen 14) und/ oder Display 12 eingegeben werden. Die Pipettell und das Gerät 71 weisen jeweils eine Kommunikationseinrichtung zur Übertragung der Informationen von der Pipette 11 an das Gerät auf. Entsprechend ist die Pipette 11 zur Übertragung der Informationen an das Gerät 73 und das Gerät 73 zum Empfang der Informationen von der Pipette 11 ausgebildet und/oder programmiert, wobei das Gerät 73 in Abhängigkeit von den Informationen gesteuert wird. Insbesondere kann der oben beschriebene Antrieb, welcher der Betätigung des zweiten Bedienelements 47 dient, in Abhängigkeit der Informationen gesteuert werden.

Das Gerät 71 kann aber auch Teil einer Positioniereinrichtung zur Positionierung der Pipette sein. Eine solche Positioniereinrichtung kann einen, zwei oder mehr weitere Halter zum Halter von Behältern aufweisen, wobei der Halter 73 für die Pipette 11 relativ zu einem oder mehreren der weiteren Halter bewegbar ausgebildet sein kann, damit die Pipette mittels der Positioniereinrichtung zum Beispiel von einem ersten Behälter zu einem zweiten Behälter bewegt werden kann. Um die Bewegung des Halters 73 für die Pipette 11 relativ zum einen oder relativ zu den mehreren weiteren Haltern auszuführen, kann die Positioniereinrichtung einen oder mehrere weitere Antriebe aufweisen. Es kann vorgesehen sein, dass auch diese Bewegung(en) in Abhängigkeit der besagten Informationen erfolgt und/oder wenn die Positioniereinrichtung dazu ausgebildet und/oder programmiert ist, die besagte(n) Bewegung(en) in Abhängigkeit von den Informationen auszuführen.

Zum bestimmungsgemässen Gebrauch der Pipette 11 ist das Gerät 73 nicht notwendig. Es handelt sich bei letzterem lediglich um ein Zusatzgerät. Insbesondere ist der Abwurfmechanismus auch ohne das Gerät 73 (mittels des ersten Bedienelements 45) betätigbar und/oder der Abwurfmechanismus ist Teil der Pipette. Durch die Verwendung des Geräts 73 wird die Entfernung der Pipettenspitzen jedoch erleichtert. Sie ist insbesondere bei Gebrauch des Geräts 73 als Positioniereinrichtung sinnvoll.

### Bezugszeichenliste:

- 11: Pipette
- 12: Display
- 13: Handgriff
- 14: Knöpfe
- 15: Verbindungsabschnitt
- 21: Gehäuse
- 23: Öffnung
- 43: Schieber
- 45: erstes Bedienelement
- 47: zweites Bedienelement
- 49: bewegliches Glied
- 51: Öffnung
- 71: Gerät zum Betätigen des Abwurfmechanismus
- 73: Halter
- 75: obere Bügel
- 77: untere Bügel
- 81: Hebel
- 83: Stift

## Patentansprüche

1. Handgehaltene Pipette mit einem Handgriff, einem Verbindungsabschnitt zum Aufstecken einer Pipettenspitze und einem Abwurfmechanismus zum Entfernen der Pipettenspitze vom Verbindungsabschnitt,
- wobei der Abwurfmechanismus im Bereich des Verbindungsabschnitts einen relativ zum Verbindungsabschnitt beweglichen Schieber aufweist, der dazu ausgebildet ist, beim Betätigen des Abwurfmechanismus die Pipettenspitze vom Verbindungsabschnitt zu schieben,
- die Pipette ein erstes und ein zweites von aussen zugängliches Bedienelement zum Betätigen des Abwurfmechanismus aufweist, und
- das erste Bedienelement im Bereich des Handgriffs angeordnet und von Hand betätigbar ist,
**dadurch gekennzeichnet, dass**
- das zweite Bedienelement maschinell betätigbar ist und dazu ausgebildet ist, mit einem beweglichen Teil eines Geräts zum Betätigen des Abwurfmechanismus zusammenzuwirken.

2. Pipette nach Anspruch 1, **dadurch gekennzeichnet, dass** die Pipette ein Gehäuse aufweist, wobei das zweite Bedienelement fest mit einem innerhalb des Gehäuses beweglichen Glied des Abwurfmechanismus verbunden und/oder am beweglichen Glied ausgebildet ist, wobei das zweite Bedienelement zwischen dem Handgriff und dem Verbindungsabschnitt angeordnet ist.

3. Pipette nach einem der Ansprüche 1 bis 2, **dadurch gekennzeichnet, dass** das zweite Bedienelement Mittel zum formschlüssigen oder kraftschlüssigen Verbinden mit dem beweglichen Teil aufweist.

4. Pipette nach Anspruch 3, **dadurch gekennzeichnet, dass** es sich um eine elektronische Pipette handelt, wobei die Pipette einen Speicher aufweist, wobei der Speicher Informationen zur Steuerung des Geräts zum Betätigen des Abwurfmechanismus enthält, und wobei die Pipette eine Kommunikationseinrichtung zur Übertragung der Informationen an das Gerät zum Betätigen des Abwurfmechanismus aufweist.

5. Pipette nach einem der Ansprüche 1 bis 4, **dadurch gekennzeichnet, dass** der Schieber dazu ausgebildet ist, beim Betätigen des Abwurfmechanismus mit der Pipettenspitze in Kontakt stehend und/oder mit ihr in Kontakt tretend die Pipettenspitze vom Verbindungsabschnitt zu schieben, wobei der Schieber relativ zum Verbindungsabschnitt entlang der Längsachse des Verbindungsabschnitts und/oder entlang der Längsachse der auf den Verbindungsabschnitt aufgesteckten Pipettenspitze beweglich ist, und wobei das zweite Bedienelement zur Betätigung des Abwurfmechanismus vorzugsweise in dieselbe Richtung bewegbar ist.

6. Pipette nach einem der Ansprüche 1 oder 3 bis 5, **dadurch gekennzeichnet, dass** der Abwurfmechanismus dazu ausgebildet ist, eine von einem Benutzer auf das erste Bedienelement ausgeübte Kraft auf den Schieber zu übertragen, wobei der Abwurfmechanismus zu diesem Zweck ein relativ zum Verbindungsabschnitt bewegliches, mit dem Schieber verbundenes Glied aufweist, wobei das zweite Bedienelement am beweglichen Glied ausgebildet ist, so dass eine Bewegung des zweiten Bedienelements eine Bewegung des beweglichen Glieds bewirkt.

7. Pipette nach einem der Ansprüche 1 oder 3 bis 6, **dadurch gekennzeichnet, dass** die Pipette ein den Abwurfmechanismus umschliessendes Gehäuse aufweist, wobei das zweite Bedienelement durch eine Öffnung im Gehäuse von aussen zugänglich ausgebildet ist, wobei die Öffnung vorzugsweise durch einen am Gehäuse angeordneten, beweglichen Verschluss verschliessbar ist.

8. Pipette nach einem der Ansprüche 1 bis 7, **dadurch gekennzeichnet, dass** es sich um eine Mehrkanalpipette handelt, welche mehrere Verbindungsabschnitte zum Aufstecken von jeweils einer Pipettenspitze aufweist.

9. Gerät zum Betätigen des Abwurfmechanismus einer Pipette nach einem der Ansprüche 1 bis 8, **dadurch gekennzeichnet, dass** das Gerät einen Antrieb und ein mittels des Antriebs bewegliches Teil aufweist, wobei das bewegliche Teil dazu ausgebildet ist, mit dem zweiten Bedienelement der Pipette zur Betätigung des Abwurfmechanismus zusammenzuwirken.

10. Gerät nach Anspruch 9, **dadurch gekennzeichnet, dass** das Gerät einen Halter zum Halten der Pipette aufweist, wobei der Antrieb und das bewegliche Teil relativ zum Halter so positioniert sind, dass das zweite Bedienelement im Zustand, wenn die Pipette im Halter gehalten ist, durch das bewegliche Teil betätigbar ist.

11. Gerät nach einem der Ansprüche 9 bis 10, **dadurch gekennzeichnet, dass** das Gerät dazu ausgebildet ist, Informationen von der Pipette zu empfangen und in Abhängigkeit von diesen Informationen das zweite Bedienelement zu betätigen, wobei das Gerät zu diesem Zweck ein Kommunikationseinrichtung zum Empfang der Informationen und einen Mikroprozessor zur Verarbeitung der Informationen und zur Steuerung des Antriebs aufweist.

12. Gerät nach Anspruch 11, **dadurch gekennzeichnet, dass** es sich beim Gerät um eine Positioniereinrichtung zur Positionierung der Pipette bei der Aufnahme und/oder Abgabe von Proben und/oder deren Transport von einem ersten Behälter zu einem zweiten Behälter handelt, wobei das Gerät zusätzlich zum ersten Halter einen zweiten Halter zum Halten des ersten oder zweiten Behälters und einen zweiten Antrieb zur Bewegung des ersten Halters relativ zum zweiten Halter aufweist, und wobei das Gerät dazu ausgebildet ist, in Abhängigkeit der Informationen von der Pipette die Positionierung der Pipette vorzunehmen und/oder die Bewegung des ersten Halters relativ zum zweiten Halter auszuführen.

13. System beinhaltend eine Pipette nach einem der Ansprüche 1 bis 8 und ein Gerät nach einem der Ansprüche 9 bis 12.

14. Verfahren zum Entfernen einer Pipettenspitze von einem Verbindungsabschnitt einer handgehaltenen Pipette mit einem Handgriff, einem Abwurfmechanismus zum Entfernen der Pipettenspitze vom Verbindungsabschnitt sowie einem ersten und einem zweiten Bedienelement zum Betätigen des Abwurfmechanismus, wobei das erste Bedienelement im Bereich des Handgriffs angeordnet und von Hand betätigbar ist, **dadurch gekennzeichnet, dass** die Pipette mit einem Gerät zum Betätigen des Abwurfmechanismus in Kontakt gebracht wird, wobei das zweite Bedienelement mit einem beweglichen Teil des Geräts in Eingriff gebracht und dann durch Bewegung des beweglichen Teils betätigt wird.

15. Verfahren nach Anspruch 14, **dadurch gekennzeichnet, dass** das Gerät einen Halter aufweist und die Pipette im Halter gehalten ist, wobei das bewegliche Teil des Geräts im Zustand wenn die Pipette im Halter gehalten ist, in Eingriff mit dem zweiten Bedienelement steht, wobei es sich bei der Pipette um eine elektronische Pipette mit einem Speicher handelt, wobei der Speicher Informationen zur Steuerung des Geräts zum Betätigen des Abwurfmechanismus enthält, wobei die Pipette und das Gerät jeweils eine Kommunikationseinrichtung aufweisen und die Informationen damit von der Pipette an das Gerät übermittelt werden, wobei das Gerät einen Antrieb zur Bewegung des beweglichen Teils aufweist, und wobei der Antrieb in Abhängigkeit von den Informationen gesteuert und so das bewegliche Teil bewegt wird.

## Claims

1. Handheld pipette with a handle, an interconnecting part to attach a pipette tip and an ejection mechanism to remove the pipette tip from the interconnecting part,
- whereby the ejection mechanism comprises a movable slider relative to the interconnecting part in the area of the interconnecting part that is designed to move the pipette tip from the interconnecting part when operating the ejection mechanism,
- the pipette comprises a first and a second operating element accessible from the outside to operate the ejection mechanism, and
- the first operating element is arranged in the area of the handle and is operable by hand,
**characterized in that**
- the second operating element is mechanically operable, and is designed to interact with a movable part of a device to operate the ejection mechanism.

2. Pipette according to Claim 1, **characterized in that** the pipette comprises a housing, whereby the second operating element is firmly connected with a member of the ejection mechanism movable inside the housing and/or is formed on the movable member, whereby the second operating element is arranged between the handle and the interconnecting part.

3. Pipette according to one of the claims 1 to 2, **characterized in that** the second operating element comprises means for the positive or frictional connection with the movable part.

4. Pipette according to claim 3, **characterized in that** it deals with an electronic pipette, whereby the pipette comprises a memory, whereby the memory contains information to control the device for activating the ejection mechanism, and whereby the pipette comprises a communication device to transmit the information to the device for activating the ejection mechanism.

5. Pipette according to one of the claims 1 to 4, **characterized in that** the slider is designed to slide the pipette tip from the interconnecting part when operating the ejection mechanism that is in contact with the pipette tip and/or is getting into contact with it, whereby the slider is movable relative to the interconnecting part along the longitudinal axis of the interconnecting part and/or along the longitudinal axis of the pipette tip attached on the interconnecting part, and whereby the second operating element is preferably movable in the same direction to operate the ejection mechanism.

6. Pipette according to one of the claims 1 or 3 to 5, **characterized in that** the ejection mechanism is designed to transfer a force exerted from a user onto the first operating element to the slider, whereby the ejection mechanism comprises a movable member relative to the interconnecting part connected with the slider for this purpose, so that a movement of the second operating element effects a movement of the movable member.

7. Pipette according to one of the claims 1 or 3 to 6, **characterized in that** the pipette has a housing surrounding the ejection mechanism, whereby the second operating element is formed accessible from the outside through an opening in the housing, whereby the opening is preferably closable by a movable closure arranged on the housing.

8. Pipette according to one of the claims 1 to 7, **characterized in that** it pertains to a multi-channel pipette that comprises several interconnecting parts to attach one pipette tip each.

9. Device to operate the ejection mechanism of a pipette according to one of the claims 1 to 8, **characterized in that** the device comprises a drive and a part movable by means of the drive, whereby the movable part is formed to interact with the second operating element of the pipette to operate the ejection mechanism.

10. Device according to claim 9, **characterized in that** the device comprises a holder to hold the pipette, whereby the drive and the movable part are positioned relative to the holder in such a way that when the second operating element is in the state, when the pipette is held in the holder, is operable through the movable part.

11. Device according to one of the claims 9 to 10, **characterized in that** the device is designed to receive information from the pipette and to operate the second operating element depending on this information, whereby the device comprises a communication device to receive the information and a microprocessor to process the information and to control the drive for this purpose.

12. Device according to claim 11, **characterized in that** the device is a positioning device to position the pipette during the collecting and/or dispensing of samples and/or their transport from a first container to a second container, whereby the device in addition to the first holder comprises a second holder to hold the first or second container and a second drive to move the first holder relative to the second holder, and whereby the device is designed to perform the positioning of the pipette depending on the information and/or execute the movement of the first holder relative to the second holder.

13. System comprising a pipette according to one of the claims 1 to 8 and device according to one of the claims 9 to 12.

14. Procedure for removing a pipette tip from the interconnecting part of a handheld pipette with a handle, an ejection mechanism to remove the pipette tip from the interconnecting part as well as a first and a second operating element to operate the ejection mechanism, whereby the first operating is arranged in the area of the handle and is operable by hand, **characterized in that** the pipette is brought into contact with a device for operating the ejection mechanism, whereby the second operating element is engaged with a movable part of the device and is then operated by moving the movable part.

15. Procedure according to claim 14, **characterized in that** the device comprises a holder and the pipette is held in the holder, whereby the movable part of the device in the state when the pipette is held in the holder, is engaged with the second operating element, whereby the pipette is an electronic pipette with a memory, whereby the memory contains information to control the device for operating the ejection mechanism, whereby the pipette and the device comprise a communication device each, and the information is thereby transmitted from the pipette to the device, whereby the device comprises a drive to move the movable part, and whereby the drive is controlled depending on the information and the movable part is thus moved.

## Revendications

1. Pipette tenue à la main avec un manche, une section de jonction pour emboîter une pointe de pipette et un mécanisme d'éjection pour enlever la pointe de pipette de la section de jonction,
- cependant que le mécanisme d'éjection présente, dans la zone de la section de jonction, un curseur mobile par rapport à la section de jonction qui est configuré pour pousser la pointe de la pipette de la section de jonction lors de l'actionnement du mécanisme d'éjection,
- la pipette présente un premier et un second élément de commande accessible de l'extérieur pour actionner le mécanisme d'éjection et
- le premier élément de commande est placé dans la zone du manche et peut être actionné à la main,
**caractérisée en ce que**
le second élément de commande peut être actionné mécaniquement et est configuré pour coopérer avec une partie mobile d'un appareil pour actionner le mécanisme d'éjection.

2. Pipette selon la revendication 1, **caractérisée en ce que** la pipette présente un boîtier, cependant que le second élément de commande est relié de manière fixe avec un organe du mécanisme d'éjection qui est mobile à l'intérieur du boîtier et/ou est configuré sur l'organe mobile, cependant que le second élément de commande est placé entre le manche et la section de jonction.

3. Pipette selon l'une des revendications 1 à 2, **caractérisée en ce que** le second élément de commande présente des moyens pour la jonction par liaison de forme ou par force avec la partie mobile.

4. Pipette selon la revendication 3, **caractérisée en ce qu'**il s'agit d'une pipette électronique, la pipette présentant une mémoire, la mémoire contenant des informations pour la commande de l'appareil pour actionner le mécanisme d'éjection et la pipette présentant un dispositif de communication pour la transmission des informations à l'appareil pour actionner le mécanisme d'éjection.

5. Pipette selon l'une des revendications 1 à 4, **caractérisée en ce que** le curseur est configuré, en étant en contact avec la pointe de la pipette lors de l'actionnement du mécanisme d'éjection et/ou en entrant en contact avec elle, pour faire coulisser la pointe de la pipette de la section de jonction, le curseur étant mobile par rapport à la section de jonction le long de l'axe longitudinal de la section de jonction et/ou le long de l'axe longitudinal de la pointe de la pipette emboîtée sur la section de jonction et le second élément de commande étant mobile pour l'actionnement du mécanisme d'éjection de préférence dans la même direction.

6. Pipette selon l'une des revendications 1 ou 3 à 5, **caractérisée en ce que** le mécanisme d'éjection est configuré pour transmettre une force exercée par un utilisateur sur le premier élément de commande au curseur, le mécanisme d'éjection présentant à cet effet un organe mobile par rapport à la section de jonction, relié au curseur, le second élément de commande étant configuré sur l'organe mobile si bien qu'un mouvement du second élément de commande provoque un mouvement de l'organe mobile.

7. Pipette selon l'une des revendications 1 ou 3 à 6, **caractérisée en ce que** la pipette présente un boîtier qui enferme le mécanisme d'éjection, le second élément de commande étant configuré accessible de l'extérieur par une ouverture dans le boîtier, l'ouverture pouvant être fermée de préférence par une fermeture mobile placée sur le boîtier.

8. Pipette selon l'une des revendications 1 à 7, **caractérisée en ce qu'**il s'agit d'une pipette multicanaux qui présente plusieurs sections de jonction pour l'emboîtement d'une pointe de pipette chacune.

9. Appareil pour actionner le mécanisme d'éjection d'une pipette selon l'une des revendications 1 à 8, **caractérisé en ce que** l'appareil présente un entraînement et une partie mobile au moyen de l'entraînement, la partie mobile étant configurée pour coopérer avec le second élément de commande de la pipette pour l'actionnement du mécanisme d'éjection.

10. Appareil selon la revendication 9, **caractérisé en ce que** l'appareil présente un support pour tenir la pipette, l'entraînement et la partie mobile étant positionnés par rapport au support de telle manière que le second élément de commande peut être actionné par la partie mobile dans l'état lorsque la pipette est tenue dans le support.

11. Appareil selon l'une des revendications 9 à 10, **caractérisé en ce que** l'appareil est configuré pour recevoir des informations de la pipette et pour actionner le second élément de commande en fonction de ces informations, l'appareil présentant à cet effet un dispositif de communication pour recevoir les informations et un microprocesseur pour traiter les informations et commander l'entraînement.

12. Appareil selon la revendication 11, **caractérisé en ce qu'**il s'agit, pour l'appareil, d'un dispositif de positionnement pour le positionnement de la pipette lors de la prise et/ou du dépôt d'échantillons et/ou de leur transport d'un premier récipient à un second récipient, l'appareil présentant, en plus du premier support, un second support pour tenir le premier ou le second récipient et un second entraînement pour le déplacement du premier support par rapport au second support et l'appareil étant configuré pour effectuer le positionnement de la pipette en fonction des informations de la pipette et/ou pour exécuter le mouvement du premier support par rapport au second support.

13. Système contenant une pipette selon l'une des revendications 1 à 8 et un appareil selon l'une des revendications 9 à 12.

14. Procédé pour enlever une pointe de pipette d'une section de jonction d'un pipette tenue à la main avec un manche, un mécanisme d'éjection pour enlever la pointe de pipette de la section de jonction ainsi qu'un premier et un second élément de commande pour actionner le mécanisme d'éjection, le premier élément de commande étant placé dans la zone du manche et pouvant être actionné à la main, **caractérisé en ce que** la pipette est mise en contact avec un appareil pour actionner le mécanisme d'éjection, le second élément de commande étant amené en prise avec une partie mobile de l'appareil et étant ensuite actionné par le déplacement de la partie mobile.

15. Procédé selon la revendication 14, **caractérisé en ce que** l'appareil présente un support et la pipette est tenue dans le support, la partie mobile de l'appareil dans l'état lorsque la pipette est tenue dans le support étant en prise avec le second élément de commande, cependant qu'il s'agit, pour la pipette, d'une pipette électronique avec une mémoire, la mémoire contenant des informations pour la commande de l'appareil pour actionner le mécanisme d'éjection, la pipette et l'appareil présentant chacun un dispositif de communication et les informations étant ainsi transmises par la pipette à l'appareil, l'appareil présentant un entraînement pour le déplacement de la partie mobile et l'entraînement étant commandé en fonction des informations et déplaçant ainsi la partie mobile.
